# EUROPEAN PATENT APPLICATION

(11) **EP 4 836 168 A1**
(43) Date of publication of application: **04.11.2026**
(21) Application number: 24913032.9
(22) Date of filing: 26.12.2024
(51) Int. Cl.: H01M 50/533, H01M 10/04, H01M 10/0587, H01M 50/536, H01M 50/538, H01M 50/586, H01M 50/591

(54) **ELECTRICITY STORAGE DEVICE AND METHOD FOR MANUFACTURING ELECTRICITY STORAGE DEVICE**

(30) Priority: 27.12.2023 JP 2023221631
(71) Applicant: Panasonic Intellectual Property Management Co., Ltd., Kadoma-shi, Osaka 571-0057 (JP)
(72) Inventor: NAGAO, Takeshi, Osaka 571-0057 (JP); KOZUKI, Kiyomi, Osaka 571-0057 (JP); SATO, Kasumi, Osaka 571-0057 (JP)
(74) Representative: Eisenführ Speiser
(86) International application number: PCT/JP2024/046229
(87) International publication number: WO 2025/143146

(57) **Abstract**

This electricity storage device comprises: an electrode body (14) in which a first electrode plate and a second electrode plate are wound with a separator interposed therebetween; and an exterior body (15) that accommodates the electrode body. The first electrode plate has a first core body and a first mixture layer formed on the surface of a first core body. First exposed portions where the first core body is exposed are disposed at one side end portion of the electrode body in the winding axis direction. Each first exposed portion has a folded portion obtained by folding back one or more times and folding so as to overlap. The folded portions are bent in a first direction, and the folded portions of the adjacent circumferential portions of the first electrode plate overlap. A current collecting portion is formed at the one side end portion in the winding axis direction.

## Description

### TECHNICAL FIELD

The present disclosure relates to a power storage device and a manufacturing method for a power storage device.

### BACKGROUND ART

There has been known a power storage device such as a cylindrical secondary battery comprising an electrode assembly on which a positive electrode plate and a negative electrode plate are wound via a separator and a housing that houses the electrode assembly.

Patent Literature 1 describes that, in a cylindrical battery, an upper end portion of an inner current collector on a positive electrode side forms a side end portion not having an active material, the side end portion is bent to the inner side at the upper end, and the bent portion and a disk-shaped current collector are primarily welded. The current collector is secondarily welded to a disk portion of a positive electrode terminal, whereby the positive electrode terminal is welded to the inner current collector.

### CITATION LIST

### PATENT LITERATURE

PATENT LITERATURE 1: Japanese Unexamined Patent Application Publication No. Hei11-185725

### SUMMARY

In the configuration described in Patent Literature 1, there is room for improvement from the viewpoint of achieving reliability improvement of a power storage device.

It is an advantage of the present disclosure to achieve reliability improvement in a power storage device.

A power storage device according to the present disclosure is a power storage device comprising: an electrode assembly in which a first electrode plate and a second electrode plate are stacked in a first direction via a separator; and a housing that houses the electrode assembly, wherein the first electrode plate includes a first core and a first mixture layer formed on a surface of the first core, a first exposed portion in which the first core is exposed is disposed at one side end portion in a winding axial direction of the electrode assembly, the first exposed portion includes folded portions turned over once or more and folded to overlap, the folded portions are bent in the first direction, and the folded portions in adjacent turning portions in the first direction of the first electrode plate overlap each other, and a current collector portion is formed at the one side end portion in the winding axial direction.

With the power storage device according to the present disclosure, it is possible to achieve reliability improvement.

### BRIEF DESCRIPTION OF DRAWING

FIG. 1 is a sectional view along an axial direction of a cylindrical secondary battery that is a power storage device in an example of an embodiment.
FIG. 2 is a diagram in which a part of an electrode assembly included in the cylindrical secondary battery illustrated in FIG. 1 is unrolled and is a perspective view illustrating a state before formation of a positive electrode current collector portion and a negative electrode current collector portion.
FIG. 3 is an A part enlarged view of FIG. 1 partially omitted and illustrated.
FIG. 4 is a diagram in which the electrode assembly and an insulating plate on the upper side are extracted from FIG. 1 and viewed from above.
FIG. 5 is a diagram illustrating the electrode assembly with the insulating plate on the upper side removed from FIG. 4.
FIG. 6 is an unrolled view of a positive electrode plate before formation of positive electrode folded portions.
FIG. 7(a) is a B-B sectional view of FIG. 6 and (b) is a C part enlarged corresponding view of (a) illustrating a state in which the positive electrode folded portions are formed in a positive electrode exposed portion in a folding step.
FIG. 8 is a sectional view illustrating a state in which, in a winding step, the positive electrode folded portions overlap in adjacent turning portions of the positive electrode plate.
FIG. 9 is a sectional view illustrating a state in which, in a bending step, the positive electrode folded portions in a plurality of turning portions of the positive electrode plate bent to the inner circumference side at one side end portion in a winding axial direction of the electrode assembly and the positive electrode folded portions in the adjacent turning portions of the positive electrode plate overlap.
FIG. 10 is a sectional view illustrating a state in which, in a welding step, the positive electrode folded portions in the plurality of turning portions of the positive electrode plate are welded and integrated.
FIG. 11 is a schematic diagram illustrating a state in which, in the bending step, the positive electrode folded portions in the plurality of turning portions of the positive electrode plate are further bent to the inner circumference side of the electrode assembly than in FIG. 9.

### DESCRIPTION OF EMBODIMENTS

Conventionally, there has been known, in a power storage device including a winding-type electrode assembly, a configuration in which an exposed portion of an electrode plate is protruded from one side end portion in a winding axial direction and the exposed portion is joined to a current collector. In this configuration, it is likely that a resistance reduction can be achieved unlike a case in which a connection lead joined to a part in a winding direction of the electrode plate is led out and the connection lead is joined to the current collector. However, turning portions of the exposed portion of the electrode plate is connected only in the winding direction. Accordingly, it is likely that the rigidity of a portion located at the end portion in the winding axial direction of the electrode plate and formed by the exposed portion decreases. For this reason, the shape and the position of the portion formed by the exposed portion become unstable and there is room for improvement from the viewpoint of reliability improvement.

The present inventors have found as a result of intensive studies that a first exposed portion in which a first core is exposed is disposed at one end portion in a winding axial direction of an electrode assembly, the first exposed portion includes folded portions turned over once or more and folded to overlap, the folded portions are bent in a first direction that is a stacking direction of an electrode assembly, the folded portions in adjacent turning portions of the electrode assembly overlap, and a current collector portion is formed at the one side end portion in the winding axial direction, whereby reliability improvement can be achieved. Specifically, since the rigidity of the current collector portion formed by the exposed portion can be increased, it is possible to stabilize the shape and the position of the current collector portion. Therefore, the effect explained above can be obtained.

An embodiment according to the present invention is explained in detail below with reference to the accompanying diagrams. In the following explanation, specific shapes, materials, numerical values, directions, and the like are exemplifications for facilitating understanding of the present invention and can be changed as appropriate according to the specifications of a power storage device. In the following explanation, the term "substantially" is used in, for example, a meaning including a meaning considered substantially the same in addition to a meaning that is completely the same. Further, when a plurality of embodiments and a plurality of modifications are included in the following explanation, it is assumed from the beginning that characteristic portions of the embodiments and the modifications are used in combination as appropriate. In the following explanation, a cylindrical secondary battery is explained as the power storage device in the embodiment. However, the power storage device of the present disclosure is not limited to the cylindrical secondary battery. Various configurations can be adopted if the power storage device is a power storage device comprising a winding-type electrode assembly and a housing that houses the electrode assembly. For example, the power storage device may be an alkali storage battery or a capacitor.

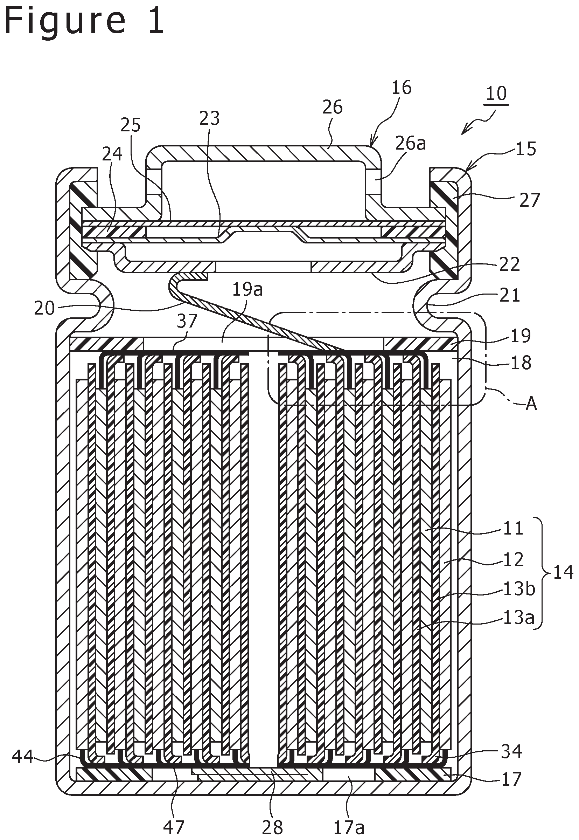

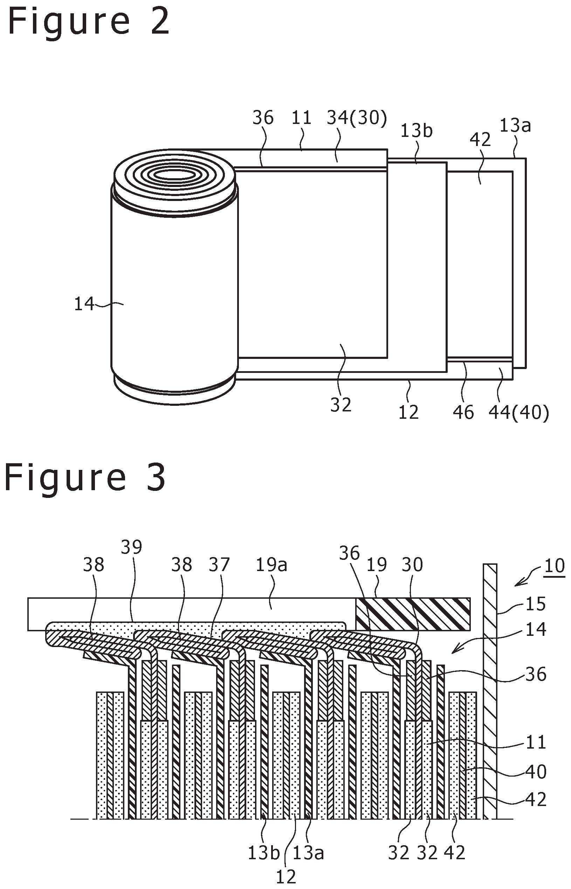

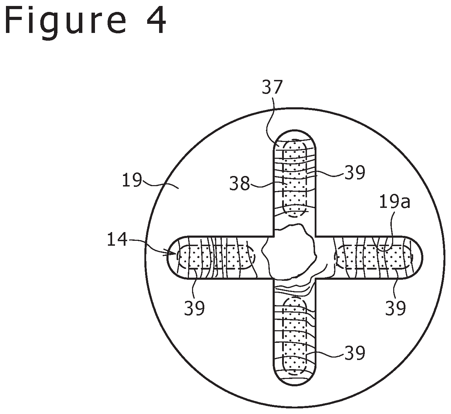

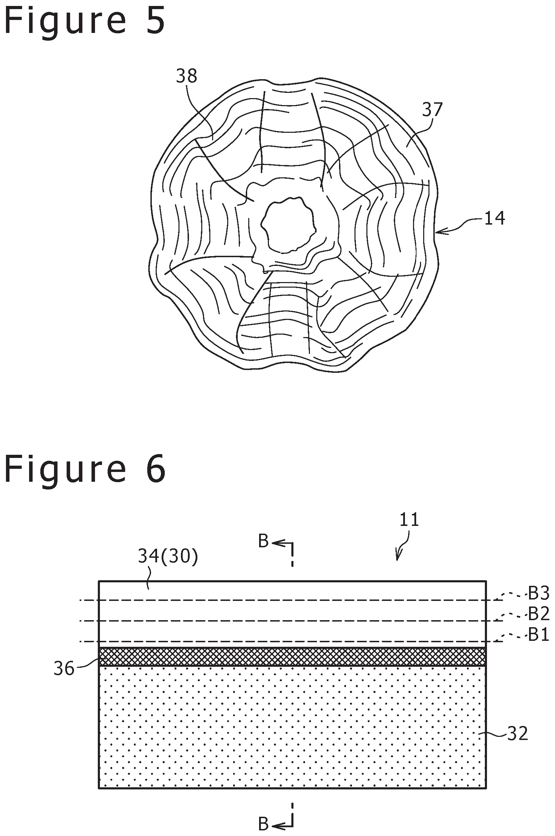

FIG. 1 is a sectional view along an axial direction of a battery 10 that is the power storage device in the embodiment. FIG. 2 is a diagram in which a part of an electrode assembly 14 included in the battery 10 is shown unrolled and is a perspective view illustrating a state before formation of a positive electrode current collector portion and a negative electrode current collector portion. FIG. 3 is an A part enlarged view of FIG. 1 partially omitted and illustrated. FIG. 4 is a diagram in which the electrode assembly 14 and an insulating plate 19 on the upper side are extracted from FIG. 1 and viewed from above. FIG. 5 is a diagram illustrating the electrode assembly 14 with the insulating plate 19 on the upper side removed from FIG. 4.

As illustrated in FIG. 1 and FIG. 2, the battery 10 is a non-aqueous electrolyte secondary battery and comprises the electrode assembly 14 of a winding type, a non-aqueous electrolyte (not illustrated), and a can-shaped housing 15 made of metal and a sealing assembly 16 fixed to an opening end portion of the housing 15. The winding-type electrode assembly 14 includes a positive electrode plate 11, a negative electrode plate 12, and two separators 13a and 13b. The positive electrode plate 11 and the negative electrode plate 12 are wound in a spiral shape via separators 13a and 13b. In the following explanation, the sealing assembly 16 side is referred to as "upper" and the bottom side of the housing 15 is referred to as "lower". The non-aqueous electrolyte includes a non-aqueous solvent and electrolyte salt dissolved in the non-aqueous solvent.

As illustrated in FIG. 2, the electrode assembly 14 has a winding structure in which the positive electrode plate 11 having an elongated shape and the negative electrode plate 12 having an elongated shape are stacked in a first direction via the two separators 13a and 13b having an elongated shape and are wound. Note that the electrode assembly of the present disclosure may be configured by alternately stacking a plurality of positive electrode plates and a plurality of negative electrode plates having a sheet shape via a plurality of separators. In this case, turned-over portions formed in exposed portions of electrode plates explained below bent in a stacking direction. A positive electrode exposed portion of the positive electrode plate 11 protrudes further upward than the negative electrode plate 12 and the separators 13a and 13b. A negative electrode exposed portion of the negative electrode plate 12 protrudes further downward than the positive electrode plate 11 and the separators 13a and 13b. One separator 13a of the two separators 13a and 13b protrudes further upward than the other separator 13b. The other separator 13b protrudes further downward than one separator 13a. In the following explanation, the two separators 13a and 13b are sometimes collectively described as separator 13.

The positive electrode plate 11 includes, at the upper side end portion, which is one side end portion in a winding axial direction (hereinafter sometimes described as axial direction) from a winding start side end to a winding end side end in the electrode plane longitudinal direction of the elongated positive electrode plate 11, a positive electrode exposed portion 34 in which a positive electrode mixture layer 32 is not provided and a positive electrode core 30 is exposed. At the upper side end portion of the positive electrode plate 11, a positive electrode protective layer 36 for achieving short circuit suppression for the positive electrode core 30 is provided between the positive electrode mixture layer 32 and the positive electrode exposed portion 34. However, the positive electrode protective layer 36 may be absent in the power storage device of the present disclosure. Note that, in the present embodiment, a case is explained in which one side in the winding axial direction is the upper side. However, one side in the winding axial direction may be set as the lower side.

The negative electrode plate 12 includes, at the lower side end portion, which is the other side end portion in the axial direction from the winding start side end to the winding end side end in the electrode plate longitudinal direction of the elongated negative electrode plate 12, a negative electrode exposed portion 44 in which a negative electrode mixture layer 42 is not provided and a negative electrode core 40 is exposed. For this reason, the upper side end portion in the axial direction of the electrode assembly 14 (the width direction of the positive electrode plate) is configured by the positive electrode exposed portion 34 and the lower side end portion in the axial direction of the electrode assembly 14 is configured by the negative electrode exposed portion 44. At the lower side end portion of the negative electrode plate 12, a negative electrode protective layer 46 for achieving short circuit suppression for the negative electrode core 40 is provided between the negative electrode mixture layer 42 and the negative electrode exposed portion 44. However, in the power storage device of the present disclosure, the negative electrode protective layer 46 may be absent.

In the present embodiment, the positive electrode plate 11 is equivalent to a first electrode plate and the negative electrode plate 12 is equivalent to a second electrode plate. The positive electrode core 30 is equivalent to a first core and the positive electrode mixture layer 32 is equivalent to a first mixture layer. The negative electrode core 40 is equivalent to a second core and the negative electrode mixture layer 42 is equivalent to a second mixture layer. Note that the first electrode plate may be the negative electrode plate 12 and the second electrode plate may be the positive electrode plate 11.

As explained below, the positive electrode exposed portion 34 includes positive electrode folded portions turned over once or more and folded to overlap, the positive electrode folded portions are bent to the inner circumference side of the electrode assembly 14, the positive electrode folded portions in adjacent turning portions of the positive electrode plate 11 overlap, and a positive electrode current collector portion 37 is formed at the upper side end portion in the axial direction. As explained below, the negative electrode exposed portion 44 includes negative electrode folded portions turned over once or more and folded to overlap, the negative electrode folded portions are bent to the inner circumference side of the electrode assembly 14, the negative electrode folded portions in adjacent turning portions of the negative electrode plate 12 overlap, and a negative electrode current collector portion 47 is formed at the lower side end portion in the axial direction.

The non-aqueous electrolyte has ion conductivity (for example, lithium ion conductivity). The non-aqueous electrolyte includes a non-aqueous solvent and electrolyte salt dissolved in the non-aqueous solvent. The non-aqueous electrolyte is not limited to a liquid electrolyte (a non-aqueous electrolytic solution) and may be a solid electrolyte in which a gel polymer or the like is used. The battery 10 is preferably a lithium ion battery. As the electrolyte salt, lithium salt such as LiBF₄ or LiPF₆ is used. As the non-aqueous solvent, for example, esters such as ethylene carbonate (EC), propylene carbonate (PC), dimethyl carbonate (DMC), ethyl-methyl carbonate (EMC), diethyl carbonate (DEC), and methyl propionate (MP) and ethers, nitriles, amides, and a mixture solvent of two or more kinds among the ethers, the nitriles, and the amides are used. The non-aqueous solvent may contain a halogen-substituted product obtained by substituting at least a part of hydrogen of these solvents with halogen atoms such as fluorine.

Examples of the halogen-substituted product include, for example, fluorinated cyclic carbonate such as fluoroethylene carbonate (FEC), fluorinated chain carbonate, and fluorinated chain carboxylic acid ester such as methyl fluoropropionate (FMP). In terms of suppression of deterioration in a charging and discharging cycle property of the non-aqueous electrolyte secondary battery, improvement of an input property, or the like, a non-aqueous electrolyte preferably includes FEC greater than or equal to 5 mass % with respect to the mass of the non-aqueous electrolyte and more preferably includes FEC greater than or equal to 5 mass % and less than or equal to 15 mass % with respect to the mass of the non-aqueous electrolyte.

As the solid electrolyte, for example, a solid or gel polymer electrolyte, an inorganic solid electrolyte, or the like is used. The polymer electrolyte includes, for example, lithium salt and a matrix polymer or a non-aqueous solvent, lithium salt, and a matrix polymer. As the matrix polymer, for example, a polymer material that absorbs the non-aqueous solvent to gel is used. As the polymer material, for example, fluorocarbon resin, acrylic resin, or polyether resin is used. As the inorganic solid electrolyte, for example, a material publicly known in an all-solid-state lithium ion secondary battery (for example, an oxide-based solid electrolyte, a sulfide-based solid electrolyte, or a halide-based solid electrolyte) is used.

The positive electrode plate 11 includes a positive electrode core 30 having a strip shape and positive electrode mixture layers 32 formed on both surfaces of the positive electrode core 30. As the positive electrode core 30, a foil of metal stable in a potential range of the positive electrode plate 11, such as aluminum or an aluminum alloy, a film in which the metal is disposed on a surface layer, or the like can be used. The thickness of the positive electrode core 30 is, for example, greater than or equal to 10 µm and less than or equal to 30 µm. The positive electrode mixture layers 32 include a positive electrode active material, a conductive agent, and a binder. The positive electrode plate 11 can be manufactured by, for example, applying a positive electrode mixture slurry including the positive electrode active material, the conductive agent, and the binder onto the positive electrode core 30, drying a coating film, and thereafter compressing the positive electrode mixture slurry to form the positive electrode mixture layers 32 on both surfaces of the positive electrode core 30. Note that the positive electrode mixture layer 32 may be formed on only one surface of the positive electrode core 30. The positive electrode mixture layer 32 has a thickness of, for example, greater than or equal to 10 µm and less than or equal to 150 µm on the side of the positive electrode core 30.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. A preferable example of the lithium-containing metal composite oxide is a composite oxide containing at least one of the group consisting of Ni, Co, Mn, and Al.

As the conductive agent included in the positive electrode mixture layer 32, carbon materials such as carbon black, acetylene black, Ketjenblack, and graphite can be exemplified. As the binder included in the positive electrode mixture layer 32, fluorocarbon resin such as polytetrafluoroethylene (PTFE) and polyvinylidene fluoride (PVdF), polyacrylonitrile (PAN), polyimide resin, acrylic resin, polyolefin resin, and the like can be exemplified. These kinds of resin and a cellulose derivative such as carboxymethyl cellulose (CMC) or salt thereof, polyethylene oxide (PEO), and the like may be concurrently used.

On both surfaces of the upper side end portion of the positive electrode core 30, positive electrode protective layers 36 are provided between the positive electrode mixture layers 32 and the positive electrode exposed portions 34. The positive electrode protective layers 36 can be composed by including, at a predetermined ratio, an inorganic material such as alumina, resin such as polyvinylidene fluoride (PVdF), and a conductive additive such as acetylene black (AB) or carbon black (CB). For example, the positive electrode protective layers 36 can be composed by including the inorganic material and the conductive additive at a mass ratio of 100:0.5. Note that the conductive additive may be omitted in the positive electrode protective layers 36. As the positive electrode protective layers 36, various materials can be adopted if the materials can be provided on the surface of the positive electrode core 30 and have a function of suppressing a short circuit of the positive electrode core 30.

The negative electrode plate 12 includes a negative electrode core 40 having a strip shape and negative electrode mixture layers 42 formed on both surfaces of the negative electrode core 40. As the negative electrode core 40, a foil of metal stable in a potential range of the negative electrode plate 12, such as copper or a copper alloy, a film in which the metal is disposed on a surface layer, and the like can be used. The thickness of the negative electrode core 40 is, for example, greater than or equal to 5 µm and less than or equal to 30 µm. The negative electrode mixture layers 42 include a negative electrode active material and a binder. The negative electrode plate 12 can be manufactured by, for example, applying a negative electrode mixture slurry including the negative electrode active material and the binder onto the negative electrode core 40, drying a coating film, and thereafter compressing the negative electrode mixture slurry to form the negative electrode mixture layers 42 on both surfaces of the negative electrode core 40. Note that the negative electrode mixture layer 42 may be formed on only one surface of the negative electrode core 40. The thickness of the negative electrode mixture layer 42 is, for example, greater than or equal to 10 µm and less than or equal to 150 µm on one side of the negative electrode core 40.

As the negative electrode active material, in general, a carbon material that irreversibly occludes and emits lithium ions is used. A preferable carbon material is graphite including natural graphite such as flake graphite, lump graphite, and earthy graphite and synthetic graphite such as lump artificial graphite and graphitized mesophase carbon microbeads. The negative electrode mixture layer 42 may include, as the negative electrode active material, an Si material containing silicon (Si). As the negative electrode active material, metal alloyed with lithium other than Si, an alloy containing the metal, a compound containing the metal, or the like may be used.

As the binder included in the negative electrode mixture layer 42, as in the case of the positive electrode plate 11, fluorocarbon resin, PAN, polyimide resin, acrylic resin, polyolefin resin, or the like may be used. However, preferably, styrene-butadiene rubber (SBR) or a modified body thereof is used. The negative electrode mixture layer 42 may include CMC or salt thereof, polyacrylic acid (PAA) or salt thereof, polyvinyl alcohol, or the like in addition to, for example, SBR.

On both surfaces of the lower side end portion (in the width direction) of the negative electrode core 40, negative electrode protective layers 46 are provided between the negative electrode mixture layer 42 and the negative electrode exposed portion 44. As the negative electrode protective layers 46, the same configuration as the positive electrode protective layers 36 can be adopted. Various negative electrode protective layers can be adopted if the negative electrode protective layers 46 can be provided on the surface of the negative electrode core 40 and have a function of short circuit suppression for the negative electrode core 40.

As the separator 13, a porous sheet having ion permeability and insulation is used. Specific examples of the porous sheet include a microporous membrane, a woven fabric, and a non-woven fabric. As the material of the separator 13, polyolefin resin such as polyethylene or polypropylene, cellulose, or the like is preferable. The separator 13 may have either a single layer structure or a laminated structure. A heat resistant layer or the like may be formed on the surface of the separator 13.

As illustrated in FIG. 1, the positive electrode current collector portion 37 and the negative electrode current collector portion 47 are respectively provided at the upper side end portion and the lower side end portion in the axial direction of the electrode assembly 14. As explained below, the positive electrode folded portions formed in the positive electrode exposed portion 34 are bent to the inner circumference side and the positive electrode folded portions in the adjacent turning portions of the positive electrode plate 11 overlap from the outermost circumference to the innermost circumference of the positive electrode plate 11 and are integrated by welding, whereby the positive electrode current collector portion 37 is formed. Note that the positive electrode folded portions may bend to the outer circumference side. A part of the positive electrode folded portions disposed side by side in the radial direction of the electrode assembly may bend to the inner circumference side and another part may bend to the outer circumference side.

As explained below, the negative electrode folded portions formed in the negative electrode exposed portion 44 are bent to the inner circumference side and the negative electrode folded portions in the adjacent turning portions of the negative electrode plate 12 overlap from the outermost circumference to the innermost circumference of the negative electrode plate 12 and are integrated by welding, whereby the negative electrode current collector portion 47 is formed.

The battery 10 includes, on the upper side in the axial direction of the positive electrode current collector portion 37, the insulating plate 19 on the upper side in which a disk-shaped and cross-shaped through hole 19a is formed. Note that the insulating plate 19 may be absent. One side end portion of a positive electrode lead 20 is joined to the upper surface of the positive electrode current collector portion 37 by welding or the like. The positive electrode lead 20 pierces through the through hole 19a of the insulating plate 19 and extends to the sealing assembly 16 side. The other side end portion of the positive electrode lead 20 is connected to the lower surface of a filter 22 of the sealing assembly 16 by welding or the like. A cap 26 configuring the top plate of the sealing assembly 16 is electrically connected to the filter 22. Accordingly, the positive electrode current collector portion 37 is electrically connected to the cap 26. The cap 26 becomes a positive electrode terminal. The positive electrode lead 20 is a conductive member made of, for example, metal containing aluminum as a main component. Note that the positive electrode current collector portion in the present disclosure may be joined to the positive electrode current collector plate, which is the metal plate, and the positive electrode current collector plate and the positive electrode lead may be connected. At this time, the insulating plate is disposed on the positive electrode current collector plate. The positive electrode current collector portion may be joined to the filter not via the positive electrode lead.

Further, the battery 10 includes, on the lower side in the axial direction of the negative electrode current collector portion 47, an insulating plate 17 in which a disk-shaped and cross-shaped through hole 17a is formed. Note that the insulating plate 17 may be absent. One side end portion of a negative electrode lead 28 is joined to the lower surface of the negative electrode current collector portion 47 by welding or the like. The negative electrode lead 28 is turned over in a U shape on the inner side of the through hole 17a of the insulating plate 17. The other side end portion of the negative electrode lead 28 is connected to the inner surface of the bottom of the housing 15 by welding or the like. Accordingly, the negative electrode current collector portion 47 is electrically connected to the housing 15. The housing 15 becomes a negative electrode terminal. The negative electrode lead 28 is a conductive member made of metal such as copper. Note that the negative electrode current collector portion in the present disclosure may be joined to the negative electrode current collector plate, which is the metal plate, and the negative electrode current collector plate and the positive electrode lead may be connected. At this time, the insulating plate is disposed on the positive electrode current collector plate. The negative electrode current collector plate may be joined to the housing not via the negative electrode lead.

The battery 10 further comprises a gasket 27 made of resin disposed between the housing 15 and the sealing assembly 16. The gasket 27 is interposed between the housing 15 and the sealing assembly 16 and insulates the sealing assembly 16 from the housing 15. The gasket 27 has a role of a seal material for keeping air tightness of a battery inside and a role of an insulating material for insulating the housing 15 and the sealing assembly 16. The housing 15 includes an annular grooved portion 21 in a part in the axial direction.

The grooved portion 21 can be formed by, for example, spinning a part of a side surface to the radial direction inner side to be recessed to the radial direction inner side. The housing 15 includes a bottomed tubular portion including the grooved portion 21 and an annular shoulder portion. The bottomed tubular portion houses the electrode assembly 14 and a non-aqueous electrolyte. The shoulder portion is bent to the radial direction inner side from the end portion on an opening side of the bottomed tubular portion and extends to the inner side. The shoulder portion is formed when the upper end portion of the housing 15 is bent to the inner side and crimped to the circumferential edge portion of the sealing assembly 16. The sealing assembly 16 is crimped and fixed to the housing 15 between the shoulder portion and the grooved portion 21 via the gasket 27. In this way, the internal space of the battery 10 is sealed.

The sealing assembly 16 has structure in which the filter 22, a lower vent member 23, an insulating member 24, an upper vent member 25, and the cap 26 are stacked in order from the electrode assembly 14 side. The members configuring the sealing assembly 16 have, for example, a disk shape or a ring shape. The members excluding the insulating member 24 are electrically connected to one another. The filter 22 has at least one through hole. The lower vent member 23 and the upper vent member 25 are connected at the centers thereof. The insulating member 24 is interposed between the circumferential edge portions thereof.

When the battery 10 abnormally generates heat and the internal pressure of the battery 10 rises, the lower vent member 23 deforms to push up the upper vent member 25 to the cap 26 side and ruptures and a current path between the lower vent member 23 and the upper vent member 25 is blocked. When the internal pressure further rises, the upper vent member 25 ruptures and gas is discharged from a through hole 26a of the cap 26. The discharge of the gas can prevent the internal pressure of the battery 10 from excessively rising to rupture the battery 10. Therefore, the safety of the battery 10 is improved.

A configuration of and a manufacturing method for the positive electrode current collector portion 37 are explained in detail with reference to FIG. 3 to FIG. 10. FIG. 3 is an A part enlarged view of FIG. 1 partially omitted and illustrated. FIG. 4 is a diagram in which the electrode assembly 14 and the insulating plate 19 on the upper side are extracted from FIG. 1 and viewed from above. FIG. 5 is a diagram illustrating the electrode assembly 14 with the insulating plate 19 on the upper side removed from FIG. 4. FIG. 6 is an unrolled view of the positive electrode plate 11 before formation of positive electrode folded portions.

As illustrated in FIG. 3 to FIG. 5, the positive electrode current collector portion 37, the upper end of which is substantially annular, is formed at the upper end portion of the positive electrode exposed portion 34. The positive electrode current collector portion 37 is formed by the positive electrode exposed portion 34 and is provided at the upper side end portion of the electrode assembly 14. Specifically, the positive electrode exposed portion 34 includes the positive electrode folded portions 38 turned over twice and folded to overlap as explained below. The positive electrode folded portions 38 are bent to the inner circumference side of the electrode assembly 14. Since the positive electrode folded portions are provided in this way, it is possible to increase the density of the positive electrode exposed portion in the positive electrode current collector portion of the electrode assembly. Therefore, welding reliability of the positive electrode current collector portion tends to be improved. Bent portions of the bent positive electrode folded portions 38 may be disposed, in the positive electrode exposed portion, further on the mixture layer side than the positive electrode folded portions before bending. Since the bent portions are disposed in this way, the positive electrode folded portions can be easily bent. The positive electrode folded portions 38 in the turning portions of the positive electrode plate 11 overlap in a state of being in contact in the adjacent turning portions in the radial direction (the first direction) and, further, the upper end portions are melted by welding and integrated, whereby the positive electrode current collector portion 37 explained above is formed. Note that at least one notch arranged in a winding direction of the electrode assembly may be formed in the positive electrode folded portions. The positive electrode folded portions are easily bent by the notch. Note that, in the folded portions, when the exposed portion is folded twice or more, the exposed portion may be folded in a spiral shape or may be folded in a zigzag shape.

At this time, on both surfaces of the upper side end portion of the positive electrode plate 11, the positive electrode protective layers 36 explained above are provided between the positive electrode mixture layers 32 and the positive electrode exposed portions 34. In FIG. 6, one side surface in the thickness direction of the positive electrode plate 11 is illustrated. In FIG. 6, the positive electrode mixture layer 32 is indicated by a sand hatch portion and the positive electrode protective layer 36 is indicated by a diagonal lattice portion. As illustrated in FIG. 6, the positive electrode protective layer 36 is provided in the electrode plate longitudinal direction from the end on one side to the end on the other side in the electrode plate longitudinal direction of the positive electrode plate 11.

Since the positive electrode protective layer 36 is provided as explained above, it is possible to differentiate rigidity at the upper side end portion of the positive electrode plate 11. The positive electrode exposed portion 34 can be stably bent to the inner circumference side of the electrode assembly 14 near the root of a portion further protruding than the upper end of the positive electrode protective layer 36.

The insulating plate 19 on the upper side is disposed on the upper side of the positive electrode current collector portion 37. As illustrated in FIG. 4, the cross-shaped through hole 19a is formed in the insulating plate 19. Two linear portions forming the through hole 19a intersect at the center of the insulating plate 19. When the insulating plate 19 is viewed from the upper side, the positive electrode current collector portion 37 is exposed in a cross shape through the through hole 19a of the insulating plate 19.

Welding such as laser welding is performed by, for example, emitting laser light to a radially extending position of the upper surface of the positive electrode current collector portion 37 from the upper side of the insulating plate 19 through the through hole 19a. Then, in a plurality of (four in FIG. 4) welded portions 39 indicated by portions indicating sand hatch portions on the inner sides of broken line frames in FIG. 4, the overlapping positive electrode folded portions 38 of the positive electrode current collector portion 37 are welded and the positive electrode current collector portion 37 is integrated. In FIG. 5, illustration of the welded portions is omitted.

One side end portion of the positive electrode lead 20 is connected by welding to or the like, one or more linear portions among the four linear portions on the upper surface of the positive electrode current collector portion 37 exposed to the upper side of the insulating plate 19 through the through hole 19a. The other side end portion of the positive electrode lead 20 is connected to, by welding or the like, the filter 22 configuring the sealing assembly 16. Accordingly, the positive electrode current collector portion 37 is connected to the sealing assembly 16 by the positive electrode lead 20 having a long plate shape not via a positive electrode current collector different from the positive electrode plate 11. For this reason, since a disposition space for the positive electrode current collector can be reduced in the housing 15, it is possible to achieve an increase in the capacity of the battery 10 and achieve a reduction in resistance because there is no component resistance of the positive electrode current collector.

A manufacturing method for the battery 10 is explained with reference to FIG. 6 and FIG. 7 to FIG. 10. The manufacturing method for the battery 10 includes a positive electrode plate base forming step, a folded portion forming step, a winding step, a bending step, and a welding step.

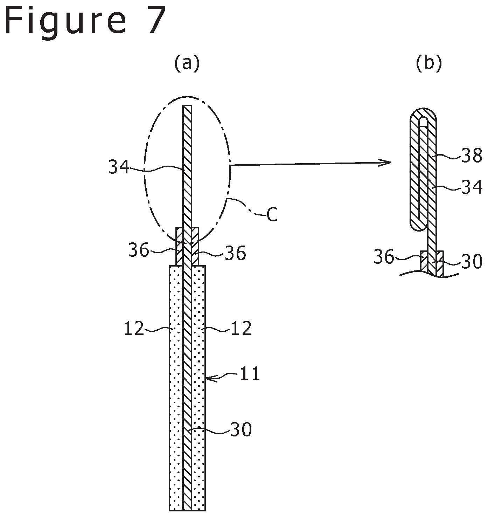

FIG. 7(a) is a B-B sectional view of FIG. 6. FIG. 7(b) is a C part enlarged corresponding view of FIG. 7(a) illustrating a state in which the positive electrode folded portions 38 are formed in the positive electrode exposed portion 34 in the folding step. As illustrated in FIG. 6 and FIG. 7(a), the positive electrode plate base forming step forms the positive electrode mixture layers 32 and the positive electrode protective layers 36 on both surfaces of the positive electrode core 30, forms the positive electrode exposed portions 34 on both surfaces of the upper end portion of the positive electrode core 30, and forms the positive electrode plate 11 before the formation of the positive electrode folded portions 38. At this time, the positive electrode exposed portions 34 can be bent back after being bent at a predetermined position in the electrode plate widthwise direction indicated by a broken line B1 in FIG. 6 in advance at the upper end portion of the positive electrode plate 11, that is, a bending planned position at the time when the positive electrode folded portions 38 are bent in the bending step explained below. Accordingly, it is possible to give a bend to a predetermined position of the positive electrode exposed portion 34. In this case, in the bending step explained below, it is easy to bend the positive electrode exposed portion 34 to the inner circumference side starting from the predetermined position to which the bend is given.

Note that, in the folding step explained below, folding is performed with broken lines B2 and B3 in FIG. 6 set as bending portions. For this reason, in order to facilitate the folding, at the positions of the broken lines B2 and B3, it is also possible to give a bend by bending back the positive electrode exposed portion 34 after bending the same.

As illustrated in FIG. 7(b), in the folded portion forming step, the positive electrode folded portions 38 are formed by, with the positions of the broken lines B2 and B3 in FIG. 6 set as bending positions, turning over the positive electrode exposed portion 34 twice in the electrode plate end direction and folding the positive electrode exposed portion 34 to overlap. At this time, as illustrated in FIG. 7(b), the positive electrode exposed portion 34 is preferably folded in a wound manner because the positive electrode exposed portion 34 is less easily bent back. The positive electrode exposed portion 34 is folded not to form a gap on the inner side as much as possible. Note that, in this example, the positive electrode folded portions 38 are formed by turning over the positive electrode exposed portion 34 twice and folding the positive electrode exposed portion 34. However, the positive electrode folded portions may be formed by turning over the positive electrode exposed portion 34 only once or three or more times and folding the positive electrode exposed portion 34. As the number of times of turning over the positive electrode folded portions increases, the rigidity of the positive electrode folded portions can be increased.

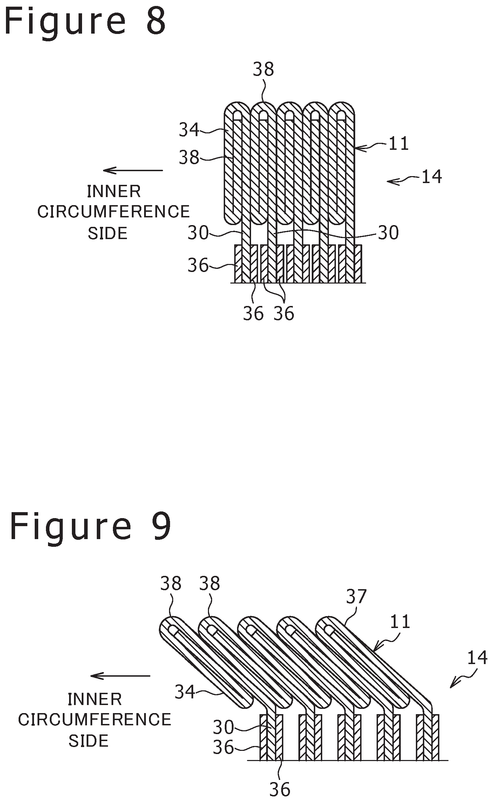

FIG. 8 is a sectional view illustrating a state in which, in the winding step, the positive electrode folded portions 38 overlap in adjacent turning portions of the positive electrode plate 11. As illustrated in FIG. 8, in the winding step, the positive electrode plate 11 is wound together with the negative electrode plate 12 and the separator 13. In FIG. 8 and FIG. 9 to FIG. 11 referred to below, illustration of the negative electrode plate 12 and the separator 13 is omitted. An interval between the adjacent turning portions of the positive electrode plate 11 is illustrated extremely smaller than an actual interval.

As illustrated in FIG. 8, by winding the positive electrode plate 11 in the winding step, the positive electrode folded portions 38 in the adjacent turning portions of the positive electrode plate 11 are brought into contact or brought close to face each other.

FIG. 9 is a sectional view illustrating a state in which, in the bending step, the positive electrode folded portions 38 in a plurality of turning portions of the positive electrode plate 11 bend to the inner circumference side at the upper side end portion of the positive electrode plate 11 and the positive electrode folded portions 38 in the adjacent turning portions of the positive electrode plate 11 overlap. As illustrated in FIG. 9, in the bending step, the electrode assembly 14 in a wound state obtained in the winding step is inserted into the inside of the housing 15 (FIG. 1). Then, the insulating plate 19 (FIG. 1) is disposed on the upper side of the positive electrode exposed portion 34 and the positive electrode exposed portion 34 is pressed to the lower side by the insulating plate 19 from the upper side. Then, by bending the positive electrode exposed portion 34 near the root of a portion protruding to the upper side from the positive electrode protective layer 36, the positive electrode folded portions 38 are bent to the inner circumference side of the electrode assembly 14. Then, the positive electrode folded portions 38 in the adjacent turning portions of the positive electrode plate 11 are superimposed to form the positive electrode current collector portion 37 at the upper side end portion of the electrode assembly 14. At this time, the positive electrode folded portions 38 in the adjacent turning portions are superimposed not to form a gap between the positive electrode folded portions 38.

When a bend is given to a predetermined position (the position of the broken line B1 in FIG. 6) in the electrode plate widthwise direction in advance before the positive electrode plate 11 is wound, the positive electrode plate 11 is bent at the predetermined position and the positive electrode folded portions 38 easily bend to the inner circumference side of the electrode assembly 14.

In the bending step explained above, actually, as illustrated in FIG. 3, two separators 13a and 13b and one negative electrode plate 12 are disposed between the turning portions of the positive electrode plate 11. At this time, as illustrated in FIG. 2 and FIG. 3, the upper end of one separator 13a of the two separators 13a and 13b protrudes further upward than the other separator 13b. Therefore, the upper end portion of the one separator 13a is also bent to the inner circumference side of the electrode assembly 14 together with the positive electrode exposed portion 34 and can cover the upper side of the negative electrode plate 12. Accordingly, a short circuit is more surely prevented even in a state in which the positive electrode exposed portion 34 bends toward the upper side of the negative electrode plate 12.

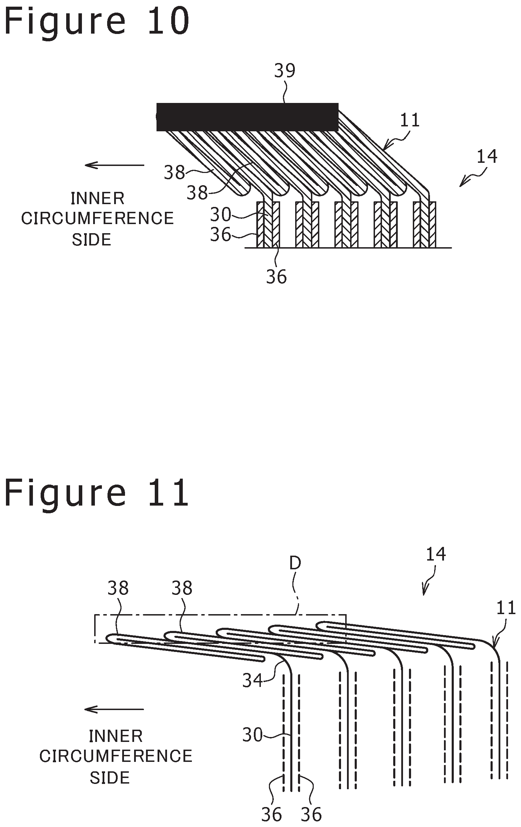

FIG. 10 is a sectional view illustrating a state in which, in the welding step, the positive electrode folded portions 38 in the plurality of turning portions of the positive electrode plate 11 are welded and integrated. In FIG. 10, the welded portion 39 is schematically indicated by a portion blacked out with a black square. As illustrated in FIG. 10, in the welding step, as explained above, when viewed from the upper side of the insulating plate 19, welding such as laser welding is performed on a portion exposed through the through hole 19a of the insulating plate 19 on the upper surface of the positive electrode current collector portion 37. Accordingly, the positive electrode folded portions 38 in the adjacent turning portions of the positive electrode plate 11 in the positive electrode exposed portion 34 are joined by welding to integrate the positive electrode current collector portion 37 in a state in which the positive electrode folded portions 38 densely overlap.

FIG. 11 is a schematic diagram illustrating a state in which, in the bending step, the positive electrode folded portions 38 in the plurality of turning portions of the positive electrode plate 11 are further bent to the inner circumference side of the electrode assembly 14 than in FIG. 9. As illustrated in FIG. 11, in the bending step explained above, the positive electrode folded portions 38 in the plurality of turning portions of the positive electrode plate 11 may be further bent to the inner circumference side of the electrode assembly 14 than in the case illustrated in FIG. 9 to be closer to a state of extending in the radial direction and, in this state, the positive electrode current collector portion 37 may be integrated in a state in which the positive electrode folded portions 38 densely overlap. In FIG. 11, the positive electrode folded portions 38 are welded in a portion surrounded by an alternate long and short dash line D.

Note that, in the embodiment explained above, a configuration is explained in which, after the bending step, the positive electrode current collector portion 37 is welded in a state in which the insulating plate 19 is disposed on the upper side of the electrode assembly 14. However, after the bending step in which the insulating plate 19 is used, the insulating plate 19 may be detached from the electrode assembly 14 and welding such as laser welding may be performed from the upper side of the positive electrode current collector portion 37. After the welding, the insulating plate 19 is disposed again on the upper side of the electrode assembly 14.

On the other hand, as illustrated in FIG. 1, the negative electrode current collector portion 47, the lower end of which is annular, is formed at the lower end portions of the negative electrode exposed portion 44. The negative electrode current collector portion 47 is formed by the negative electrode exposed portion 44 and provided at the lower side end portion of the electrode assembly 14. Specifically, like the positive electrode exposed portion 34, the negative electrode exposed portion 44 includes negative electrode folded portions turned over twice and folded to overlap. The negative electrode folded portions are bent to the inner circumference side of the electrode assembly 14. Then, the negative electrode folded portions in turning portions of the negative electrode plate 12 overlap in adjacent turning portions and, further, the lower end portions are melted by welding and integrated. Accordingly, the negative electrode current collector portion 47 explained above is formed.

At this time, on both surfaces of the lower side end portion of the negative electrode plate 12, the negative electrode protective layer 46 (FIG. 2) explained above is provided between the negative electrode mixture layer 42 (FIG. 2) and the negative electrode exposed portion 44. Since the negative electrode protective layer 46 is provided, it is possible to differentiate rigidity at the lower side end portion of the negative electrode plate 12. It is easy to stably bend the negative electrode exposed portion 44 to the inner circumference side of the electrode assembly **14** near the root of a portion further protruding than the lower end of the negative electrode protective layer 46. Note that the negative electrode protective layer 46 of the negative electrode plate 12 may be omitted.

When the negative electrode folded portions are bent to the inner circumference side of the electrode assembly **14,** actually, two separators 13a and 13b and one positive electrode plate **11** are disposed between turning portions of the negative electrode plate 12. At this time, as illustrated in FIG. 2, the other separator 13b of the two separators 13a and 13b further protrudes downward than one separator 13a. Therefore, the other separator 13b can also be bent to the inner circumference side of the electrode assembly **14** together with the negative electrode exposed portion 44 and cover the lower side of the positive electrode plate 11. Accordingly, a short circuit is more securely prevented even in a state in which the negative electrode exposed portion 44 bends toward the lower side of the positive electrode plate 11.

The insulating plate 17 on the lower side is disposed on the upper side of the negative electrode current collector portion 47. The cross-shaped through hole 17a is formed in the insulating plate 17 on the lower side as in the insulating plate 19 on the upper side. The negative electrode current collector portion 47 is exposed on the lower side of the insulating plate 17 in a cross shape from the through hole 17a of the insulating plate 17.

Welding such as laser welding is performed by, for example, emitting laser light to a radially extending position of the lower surface of the negative electrode current collector portion 47 from the lower side of the insulating plate 17 through the through hole 17a. Then, in a plurality of welded portions, the overlapping negative electrode folded portions of the negative electrode current collector portion 47 are welded and the negative electrode current collector portion 47 is integrated in a state in which the negative electrode folded portions densely overlap. Further, when the insulating plate 17 is viewed from the lower side, one side end portion of the negative electrode lead 28 is connected by welding or the like to one or more linear portions among four linear portions of the lower surface of the negative electrode current collector portion 47 exposed through the through hole 17a. The negative electrode lead 28 is turned over in a substantial U shape in the through hole 17a. The other side end portion of the negative electrode lead 28 is connected to the bottom of the housing 15 by welding such as laser welding. Accordingly, the negative electrode current collector portion 47 is connected to the housing 15 by the negative electrode lead 28 not via a negative electrode current collector different from the negative electrode plate 12. For this reason, since a disposition space for the negative electrode current collector can be reduced in the housing 15, it is possible to achieve an increase in the capacity of the battery 10 and achieve a reduction in resistance because there is no component resistance of the negative electrode current collector.

For example, before the electrode assembly 14 is inserted into the housing 15, welding to the negative electrode current collector portion 47 can be performed by laser welding or the like from the upper side of the insulating plate 17 in a state in which the electrode assembly 14 is vertically reversed and the insulating plate 17 is disposed on the upper side of the negative electrode current collector portion 47.

Note that the insulating plate 17 on the lower side and the negative electrode lead 28 may be omitted. After the electrode assembly 14 is inserted into the housing 15, by pressing the negative electrode exposed portion 44 against the bottom of the housing 15, it is also possible to bend the folded portions of the negative electrode exposed portion 44 to the inner circumference side and form the negative electrode current collector portion 47. Then, by emitting laser light from the outer side of the bottom of the housing 15, it is possible to, while laser-welding the negative electrode current collector portion 47 and the bottom of the housing 15, weld the lower end portions of the superimposed negative electrode folded portions of the negative electrode current collector portion and integrate the negative electrode current collector portion 47 in a state in which the negative electrode folded portions densely overlap. With this configuration, since a space of the insulating plate 17 and the negative electrode lead 28 can also be reduced in the housing 15, it is possible to achieve a further increase in the capacity of the battery 10.

With the battery 10 explained above, the positive electrode exposed portion 34 in which the positive electrode core 30 is exposed is disposed at one side end portion in the axial direction of the electrode assembly 14, and the positive electrode exposed portion 34 includes the positive electrode folded portions 38 turned over once or more and folded to overlap. The positive electrode folded portions 38 are bent to the inner circumference side of the electrode assembly 14, the positive electrode folded portions 38 in the adjacent turning portions of the electrode assembly 14 overlap, and the positive electrode current collector portion 37 is formed at one side end portion in the axial direction. Accordingly, since the rigidity of the positive electrode current collector portion 37 formed by the positive electrode exposed portion 34 can be increased, it is possible to stabilize the shape and the position of the positive electrode current collector portion 37. For this reason, since a connection state of the positive electrode current collector portion 37 and the positive electrode connection lead can be satisfactorily stably maintained, it is possible to achieve reliability improvement of the battery 10.

Similarly, since the rigidity of the negative electrode current collector portion 47 formed by the negative electrode exposed portion 44 can be increased, it is possible to stabilize the shape and the position of the negative electrode current collector portion 47. For this reason, it is possible to achieve further reliability improvement of the battery 10.

Unlike the case of a configuration in which the positive electrode lead connected to only a part in the winding direction of the positive electrode plate is connected to the sealing assembly, in the positive electrode current collector portion 37, an electric current can be flow not only in the winding direction of the positive electrode plate 11 but also in directions other than the winding direction, such as a radial direction of the positive electrode plate in a winding state, through the positive electrode folded portions 38 in which the adjacent turning portions overlap. Therefore, it is possible to achieve a reduction in resistance. Similarly, it is also possible to achieve a reduction in resistance in the negative electrode current collector portion 47. Further, the positive electrode current collector portion 37 and the negative electrode current collector portion 47 are integrated by welding in a state in which the folded portions thereof densely overlap. Therefore, it is possible to achieve a further reduction in resistance. Accordingly, it is possible to achieve improvement in performance of the battery 10. Note that a configuration may be adopted in which the integration of the positive electrode current collector portion 37 and the negative electrode current collector portion 47 by the welding is not performed.

Note that, in the embodiment explained above, a case is explained in which both of the positive electrode current collector portion and the negative electrode current collector portion are provided in the electrode assembly. However, a configuration may be adopted in which only one of the positive electrode current collector portion and the negative electrode current collector portion is provided in the electrode assembly. In the embodiment explained above, a configuration is explained in which the positive electrode current collector to which the positive electrode exposed portion is joined and the negative electrode current collector to which the negative electrode exposed portion is joined are not provided. However, a configuration may be adopted in which one or both of the positive electrode current collector and the negative electrode current collector are provided. In this case as well, by the configuration in which one or both of the positive electrode current collector portion and the negative electrode current collector portion are provided, the rigidity thereof can be increased. Therefore, it is possible to achieve reliability improvement of a cylindrical secondary battery.

In the embodiment explained above, a case is explained in which the cross-shaped through hole is formed in the insulating plate. However, a through hole formed in the insulating plate is not limited to this and may be, for example, one linear through hole extending in the radial direction or a through hole having a shape in which three or more radially extending linear portions intersect at the center.

In the embodiment explained above, a case is explained in which, in each of the positive electrode current collector portion and the negative electrode current collector portion, the folded portions of the exposed portion are bent to the inner circumference side of the electrode assembly, the folded portions in the adjacent turning portions of the positive electrode plate or the negative electrode plate overlap, and the current collector portion is formed at the end portion in the winding axial direction. On the other hand, a configuration may be adopted in which, in one or both of the positive electrode current collector portion and the negative electrode current collector portion, the folded portions of the exposed portion are bent to the outer circumference side of the electrode assembly, the folded portions in the adjacent turning portions of the positive electrode plate or the negative electrode plate overlap, and the current collector portion is formed at the end portion in the winding axial direction.

The present disclosure is further explained by the following embodiment.
Configuration 1: A power storage device comprising:
   an electrode assembly in which a first electrode plate and a second electrode plate are stacked in a first direction via a separator; and
   a housing that houses the electrode assembly, wherein
   the first electrode plate includes a first core and a first mixture layer formed on a surface of the first core,
   a first exposed portion in which the first core is exposed is disposed at one side end portion in a winding axial direction of the electrode assembly, and
   the first exposed portion includes folded portions turned over once or more and folded to overlap, the folded portions are bent in the first direction, the folded portions in turning portions adjacent to each other in the first direction of the first electrode plate overlap, and a current collector portion is formed at the one side end portion in the winding axial direction.
Configuration 2: The power storage device described in the configuration 1, wherein
   in the electrode assembly, the first electrode plate and the second electrode plate are stacked via the separator and wound, and
   the first direction is a direction perpendicular to a winding axis of the electrode assembly.
Configuration 3: The power storage device described in the configuration 1, wherein the current collector portion is connected to, by a connection lead having a long plate shape, not via a current collector different from the first electrode plate, a sealing assembly fixed to the housing.
Configuration 4: The power storage device described in any one of the configuration 1 to the configuration 3, wherein the current collector portion is joined to a current collector.
Configuration 5: The power storage device described in any one of the configuration 1 to the configuration 4, wherein a protective layer for achieving short circuit suppression is provided between the first mixture layer and the first exposed portion.
Configuration 6: The power storage device described in any one of the configuration 1 to the configuration 5, wherein, in the first exposed portion, adjacent turning portions in the current collector portion are joined by welding.
Configuration 7: The power storage device described in any one of the configuration 1 to the configuration 6, wherein the folded portions are turned over twice or more and folded to overlap.
Configuration 8: The power storage device described in any one of the configuration 1 to the configuration 7, wherein bending points where the folded portions bend are provided, in the first exposed portion, in areas not overlapping the folded portions before bending.
Configuration 9: A manufacturing method for the power storage device described in the configuration 1,
   the first exposed portion being formed at one side end portion in an electrode plate widthwise direction corresponding to the winding axial direction in the first electrode plate,
   the manufacturing method comprising, after turning over the first exposed portion once or more in the electrode plate widthwise direction and folding the first exposed portion to overlap to thereby form the folded portions,
   bending the folded portions to an inner circumference side or an outer circumference side of the electrode assembly, superimposing the folded portions in adjacent turning portions of the first electrode plate, and forming the current collector portion at one side end portion in the winding axial direction.
Configuration 10: The manufacturing method for the power storage device described in the configuration 9, further comprising, after bending the folded portions to the inner circumference side or the outer circumference side of the electrode assembly and superimposing the folded portions in the adjacent turning portions of the first electrode plate, joining, by welding, the adjacent turning portions in the first exposed portion and forming the current collector portion that is integrated.
Configuration 11: The manufacturing method for the power storage device described in the configuration 9 or the configuration 10, further comprising, before winding the first electrode plate, after bending the first electrode plate in advance at a predetermined position in the electrode plate widthwise direction, that is, a bending planned position at a time when the folded portions are bent, bending back the first electrode plate to thereby give a bend to the predetermined position.

### REFERENCE SIGNS LIST

10 Battery, 11 Positive electrode plate, 12 Negative electrode plate, 13a and 13b Separator, 14 Electrode assembly, 15 Housing can, 16 Sealing assembly, 17 Insulating plate, 19 Insulating plate, 20 Positive electrode lead, 21 Grooved portion, 22 Filter, 23 Lower vent member, 24 Insulating member, 25 Upper vent member, 26 Cap, 26a Through hole, 27 Gasket, 28 Negative electrode lead, 30 Positive electrode core, 32 Positive electrode mixture layer, 34 Positive electrode exposed portion, 36 Positive electrode protective layer, 37 Positive electrode current collector portion, 38 Positive electrode folded portion, 39 Welded portion, 40 Negative electrode core, 42 Negative electrode mixture layer, 44 Negative electrode exposed portion, 46 Negative electrode protective layer.

## Claims

1. A power storage device comprising:
an electrode assembly in which a first electrode plate and a second electrode plate are stacked in a first direction via a separator; and
a housing that houses the electrode assembly, wherein
the first electrode plate includes a first core and a first mixture layer formed on a surface of the first core,
a first exposed portion in which the first core is exposed is disposed at one side end portion in a winding axial direction of the electrode assembly, and
the first exposed portion includes folded portions turned over once or more and folded to overlap, the folded portions are bent in the first direction, and the folded portions in adjacent turning portions in the first direction of the first electrode plate overlap each other,, and a current collector portion is formed at the one side end portion in the winding axial direction.

2. The power storage device according to claim 1, wherein
in the electrode assembly, the first electrode plate and the second electrode plate are stacked via the separator and wound, and
the first direction is a direction perpendicular to a winding axis of the electrode assembly.

3. The power storage device according to claim 1, wherein the current collector portion is connected to, by a connection lead having a long plate shape, not via a current collector different from the first electrode plate, a sealing assembly fixed to the housing.

4. The power storage device according to claim 1, wherein the current collector portion is joined to a current collector.

5. The power storage device according to claim 1, wherein a protective layer for achieving short circuit suppression is provided between the first mixture layer and the first exposed portion.

6. The power storage device according to claim 1, wherein, in the first exposed portion, adjacent turning portions in the current collector portion are joined by welding.

7. The power storage device according to claim 1, wherein the folded portions are turned over twice or more and folded to overlap.

8. The power storage device according to claim 1, wherein bending points where the folded portions bend are provided, in the first exposed portion, in areas not overlapping the folded portions before bending.

9. A manufacturing method for the power storage device according to claim 1,
the first exposed portion being formed at one side end portion in an electrode plate widthwise direction corresponding to the winding axial direction in the first electrode plate,
the manufacturing method comprising, after turning over the first exposed portion once or more in the electrode plate widthwise direction and folding the first exposed portion to overlap to thereby form the folded portions,
bending the folded portions to an inner circumference side or an outer circumference side of the electrode assembly, superimposing the folded portions in adjacent turning portions of the first electrode plate, and forming the current collector portion at one side end portion in the winding axial direction.

10. The manufacturing method for the power storage device according to claim 9, further comprising, after bending the folded portions to the inner circumference side or the outer circumference side of the electrode assembly and superimposing the folded portions in the adjacent turning portions of the first electrode plate, joining, by welding, the adjacent turning portions in the first exposed portion and forming the current collector portion that is integrated.

11. The manufacturing method for the power storage device according to claim 9, further comprising, before winding the first electrode plate, after bending the first electrode plate in advance at a predetermined position in the electrode plate widthwise direction, that is, a bending planned position at a time when the folded portions are bent, bending back the first electrode plate to thereby give a bend to the predetermined position.
